# FASCICULE DE BREVET EUROPEEN

(11) **EP 3 641 420 B1**
(45) Date de publication et mention de la délivrance du brevet: **14.06.2023**
(21) Numéro de dépôt: 19203058.3
(22) Date de dépôt: 14.10.2019
(51) Int. Cl.: H04W 56/00, H04B 1/7156

(54) **SYNCHRONISATION RADIO POUR SYSTÈMES À SAUT DE FRÉQUENCE**
FUNKSYNCHRONISIERUNG FÜR FREQUENZSPRUNGSYSTEME
RADIO SYNCHRONISATION FOR SYSTEMS WITH FREQUENCY JUMP

(30) Priorité: 18.10.2018 FR 1801099
(43) Date de publication de la demande: 22.04.2020
(73) Titulaire: Thales, 92400 Courbevoie (FR)
(72) Inventeur: FOUILLOT, Pascale, 92230 Gennevilliers (FR); FRACCHIA, Roberta, 92230 Gennevilliers (FR); DESCHARLES, Arnaud, 92230 Gennevilliers (FR); PEGA, Stéphane, 92230 Gennevilliers (FR)
(74) Mandataire: Atout PI Laplace

(56) Documents cités:
- WO-A1-2013/105085
- CN-A- 1 719 781
- US-A1- 2010 296 493

## Description

L'invention porte sur un procédé de synchronisation pour un réseau de télécommunications ad-hoc à saut de fréquence (en anglais Frequency Hopping). Plus précisément, il vise à résoudre le problème des incertitudes sur la fréquence porteuse à laquelle le récepteur doit être programmé lorsque la durée de propagation des données transmises est supérieure à la durée entre deux sauts de fréquence.

L'étalement de spectre par saut de fréquence est un mécanisme de transmissions de données qui est utilisé dans le domaine militaire et dans le domaine civil pour la transmission de données. Lorsqu'il est utilisé dans le cadre d'une forme d'onde avec accès multiple à répartition dans le temps (en anglais Time Division Multiple Access ou TDMA), il consiste à découper la bande de fréquence en plusieurs canaux, puis à transmettre les données en utilisant une combinaison de canaux variant dans le temps selon une loi connue de tous les participants du réseau. Les données sont transmises sur des courtes périodes de temps, appelées « paliers », chaque palier étant transmis dans un canal fréquentiel choisi en fonction d'une loi de saut prédéterminée. Pour ceci, les données sont regroupées par blocs de données, auxquels sont appliqués un code correcteur d'erreur et un entrelacement. Chaque bloc de données codé et entrelacé est transmis sur un ou plusieurs paliers. A la réception, le désentrelacement et le décodage des données peuvent permettre de supporter la perte d'un ou plusieurs des paliers de données.

La demande de brevet US 2010/296493 A1 décrit un procédé de communications par saut de fréquence dans un réseau ad-hoc.

Le saut de fréquence a plusieurs avantages :
- le canal de propagation variant d'un canal fréquentiel à un autre, le saut de fréquence permet de bénéficier de diversité fréquentielle.

Ainsi, si le rapport signal à bruit est très mauvais sur un palier de par les conditions de propagation par exemple, il ne le sera pas nécessairement sur les autres paliers, et le bloc de données dans son ensemble pourra être correctement décodé, ce qui ne serait pas le cas si l'ensemble du bloc de données avait été transmis sur le canal fréquentiel ayant un mauvais rapport signal à bruit. Cette propriété est intéressante pour lutter contre de mauvaises conditions de propagation sur un canal fréquentiel particulier (comme par exemple de l'évanouissement sélectif en fréquence (en anglais frequency-selective fading) ou de l'évanouissement uniforme (en anglais flat fading), ainsi qu'en cas de brouillage, intentionnel ou non intentionnel (collisions),
- un observateur extérieur au réseau cherchant à intercepter les données transmises en temps réel doit connaitre la loi de saut. Cette loi de saut est généralement protégée afin de garantir la confidentialité des données,
- lorsque le nombre de canaux fréquentiels utilisés est important, chacun des canaux n'est au final que peu utilisé, ce qui augmente la discrétion de la transmission de données.

Le mécanisme de saut de fréquence apporte donc à une forme d'onde de la robustesse aux conditions de propagation, au brouillage et à l'interception, ainsi que de la discrétion, ce qui le rend particulièrement adapté pour les transmissions militaires. Ces propriétés sont d'autant plus marquées que le nombre de canaux fréquentiels utilisés est grand et que le rythme de saut est élevé. En contrepartie, ce mécanisme requiert la disponibilité d'importantes bandes de fréquences, ajoute une complexité importante aux équipements d'émission/réception, et présente une moins bonne efficacité spectrale que les transmissions à fréquence fixe.

Dans le cadre d'une forme d'onde avec accès TDMA, les différents utilisateurs d'un réseau de télécommunications partagent les ressources temporelles et fréquentielles du réseau. Ce partage est organisé autour d'une trame TDMA, qui assigne à chaque équipement des intervalles temporels, plus souvent désignés sous le terme anglais de « slots » ou « time slots », durant lesquels un seul équipement peut émettre. Dans la suite du document, on désignera ces intervalles temporels par le terme « slots ».

Les assignations des slots aux différents équipements du réseau sont gérées au niveau des couches protocolaires des équipements à travers des mécanismes qui sont propres à cette couche protocolaire et qui ne sont pas décrits ici en détail car ils ne sont pas l'objet de l'invention.

Dans la suite du document, on désigne par le terme de synchronisation la synchronisation radio devant être réalisée au niveau des couches MAC/physique des formes d'onde dans le but de compenser les retards liés à la propagation des signaux au sein du réseau de télécommunications, et non la synchronisation des horloges des équipements, qui est une fonction réalisée au niveau des couches protocolaires et que l'on considère ici comme acquise et parfaite. L'homme du métier peut facilement adapter l'invention décrite ci-dessous à un cas d'application plus proche de la réalité dans lequel la synchronisation des horloges n'est pas parfaite, en provisionnant dans la forme d'onde des marges dédiées à la compensation des dérives d'horloges.

Dans les réseaux de télécommunications centralisés, comme par exemple les réseaux cellulaires de téléphonie mobile, tous les équipements du réseau communiquent avec un unique noeud central. Le noeud central calcule la durée de propagation du signal depuis chaque équipement du réseau, et transmets ce temps aux différents équipements afin qu'ils anticipent leurs émissions d'une durée égale à ce retard. Ce mécanisme est connu sous le nom anglais de « timing advance » (ou avance de temps), permet d'éviter les collisions de paquets au niveau du noeud central. Il correspond aux besoins d'un réseau de communications centralisé dans lequel les équipements réalisent des liaisons en point-à-point avec le noeud central.

Les réseaux ad-hoc sont des réseaux de télécommunications construits à partir de dispositifs autonomes, qui ne nécessitent pas d'infrastructure fixe et peuvent être fortement mobiles. Les données sont acheminées d'un équipement à un autre et d'un sous-réseau à un autre en utilisant les différents noeuds constituant le réseau. De tels réseaux évoluent dynamiquement selon l'apparition, la disparition, et la disponibilité des noeuds, et suivent leurs changements de position. Ainsi, le chemin parcouru par un paquet de données entre deux noeuds évolue au cours du temps, et est très difficilement prédictible. Les réseaux ad-hoc utilisent des communications point-à-point mais s'appuient également sur des communications en point à multipoint. A l'évidence, le mécanisme de timing advance n'est pas applicable aux communications point à multipoints dans lesquelles les distances entre utilisateurs sont toutes différentes. Il est alors nécessaire de provisionner dans les slots des temps de garde pour éviter les collisions de paquets.

Pour un réseau ad-hoc TDMA, chaque slot comprend alors au moins :
- un temps de garde durant lequel aucun signal n'est transmis. Ce temps de garde permet d'éviter les collisions entre des paquets de données envoyés consécutivement par deux équipements du réseau, il a donc une durée au moins égale au temps de propagation maximum des données sur le réseau de télécommunications, et
- un ou plusieurs paliers de données, dont la durée est donnée par le rythme de saut en fréquence. Sur ces paliers sont transmises les données utiles de la transmission, ainsi que différents signaux permettant d'accomplir divers traitements nécessaires à la bonne réception des messages comme la détection des débuts de paliers, l'estimation du canal de propagation, etc...

La durée d'un slot est donc au moins égale à la durée de propagation d'un signal sur une distance égale à l'élongation maximale du réseau de télécommunications, plus la durée correspondant à la transmission effective de *N* paliers, avec *N* ≥ 1. Augmenter le nombre de paliers d'un slot permet d'améliorer l'efficacité spectrale de la forme d'onde en réduisant la récurrence des temps de garde, mais réduit la disponibilité de la ressource fréquentielle. Le choix du nombre de paliers par slot est donc un choix d'implémentation qui dépend de la durée des paliers, de l'élongation du réseau, du nombre d'équipements du réseau, etc...

Des solutions connues réalisent la synchronisation entre émetteurs et récepteurs pour de tels réseaux ad-hoc TDMA. Cette synchronisation peut être réalisée palier par palier (synchronisation palier) ou slot par slot (synchronisation slot).

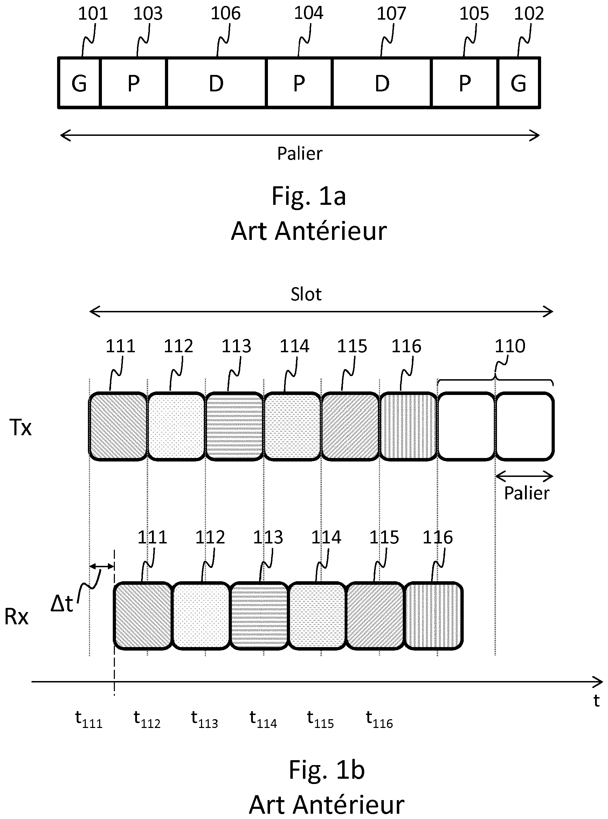

La figure 1a représente, à titre d'illustration, la structure d'un palier de données dans un réseau de télécommunications ad-hoc, lorsque la synchronisation se fait à l'horizon du palier.

Chaque palier comprend un premier temps de garde 101, situé en début de palier, et un deuxième temps de garde 102, situé en fin de palier. Ces temps de garde permettent au matériel de disposer du temps nécessaire à commuter de canal fréquentiel. Ils permettent également de compenser d'éventuelles erreurs de synchronisation entre les horloges des équipements.

Les paliers comprennent également des séquences pilote 103, 104 et 105, qui sont des séquences de symboles connus permettant au récepteur de se synchroniser finement avec le palier, et de déterminer les instants de début/fin des données de signalisation et des données utiles transmises. Les séquences pilote permettent également d'exécuter divers algorithmes de traitement du signal comme l'estimation de décalages Doppler, de décalages fréquentiels, l'estimation du canal de propagation, etc... Le nombre de séquences pilote par palier et leur position est un choix d'implémentation, l'important étant que chaque palier doit comporter au moins une séquence pilote, de préférence positionnée en début de palier.

Enfin, le palier comprend des séquences 106, 107 utilisées pour le transport des données utiles.

La figure 1b représente le principe d'une synchronisation palier selon l'état de l'art réalisée entre un émetteur Tx et un récepteur Rx, dans le cas où le retard maximum sur le réseau est inférieur à la durée d'un palier.

Dans le cas d'illustration de la figure 1b, et à titre d'illustration seulement, la durée d'un slot est de huit paliers. Les deux derniers paliers correspondent à un temps de garde 110 provisionné de manière à éviter les collisions de paquets transmis consécutivement par des équipements distincts. Aucun signal n'est transmis pendant ce temps de garde. Chaque slot comprend donc dans ce cas six paliers de données utiles 111 à 116, chacun des paliers ayant une structure semblable à celle représentée en figure 1a. Pour chaque palier, le canal fréquentiel utilisé pour la transmission est choisi parmi l'ensemble des canaux fréquentiels en fonction d'une loi de saut connue de l'émetteur et de l'ensemble des équipements destinés à recevoir les données. Les instants d'émission des paliers sont connus, ils correspondent pour les paliers 111 à 116 aux instants d'émission t₁₁₁ à t₁₁₆ respectivement. Ces instants d'émission sont connus de l'ensemble des équipements du réseau de télécommunications, car ils sont décrits par la trame TDMA.

Dans le cas d'illustration de la figure 1b, le retard de propagation maximum sur le réseau est inférieur à la durée d'un palier. Le récepteur Rx est configuré pour démarrer la recherche du premier palier 111 à partir de l'instant t₁₁₁, qui correspond à l'instant auquel le palier 111 serait effectivement reçu en l'absence de retard de propagation. Pour ceci, le récepteur positionne sa radio sur le canal fréquentiel correspondant au premier palier 111, et recherche le signal correspondant au premier palier (à travers la séquence pilote 103). Celle-ci est détectée à l'instant 117. Le récepteur dispose alors d'une estimation d'un écart temporel Δt séparant l'instant de début de palier effectif de l'instant de début de palier théorique t₁₁₁, et se reconfigure de manière pour rester sur le canal fréquentiel correspondant au palier 111 pendant la durée d'un palier à partir de l'instant de début de palier effectif. En particulier, à l'instant t₁₁₂, le récepteur est en cours de réception du premier palier, et sait qu'il doit rester sur le canal fréquentiel du premier palier. Après réception du premier palier, le récepteur configure sa radio pour veiller le deuxième palier 112 sur le canal fréquentiel approprié à partir de l'instant t₁₁₂ + Δt, et ainsi de suite de manière à recevoir l'ensemble des paliers 112 à 116.

Lorsqu'à l'instant t₁₁₂, le récepteur n'a pas été en mesure de détecter la présence du premier palier, parce que les conditions de propagation sont suffisamment mauvaises pour empêcher sa réception ou parce que le palier est brouillé, le récepteur est configuré pour se positionner sur le canal fréquentiel correspondant au deuxième palier 112 et rechercher ce deuxième palier. Ainsi, la perte du premier palier pour cause de brouillage par exemple n'entraine pas la perte de l'ensemble du slot.

Ce mécanisme fonctionne parfaitement dès lors que la durée correspondant au temps maximum de propagation d'un signal sur le réseau plus la durée de la séquence de garde initiale plus la durée de la séquence pilote plus le temps de détection et de prise en compte au niveau de la radio du récepteur d'une information de synchronisation est inférieure à la durée d'un palier.

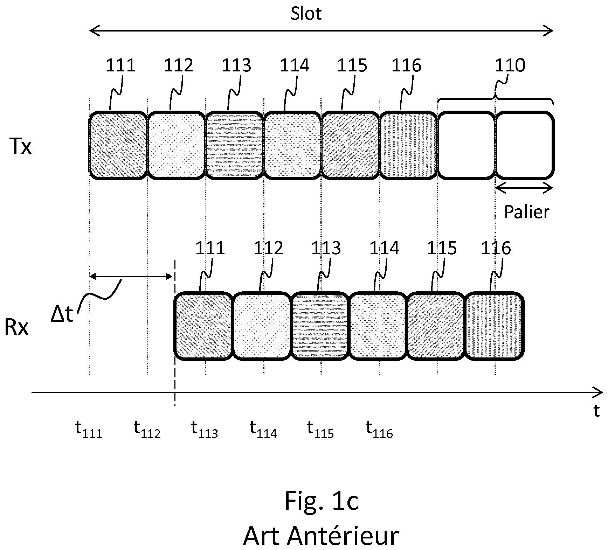

La figure 1c représente le même principe de synchronisation palier entre un émetteur Tx et un récepteur Rx selon l'état de l'art, dans le cas où le retard de propagation maximum sur le réseau est supérieur à la durée d'un palier.

Comme dans la figure 1b, le récepteur Rx est configuré pour recherche le premier palier sur le canal fréquentiel correspondant à partir de l'instant t₁₁₁. L'écart temporel Δt correspondant au temps de propagation du signal est supérieur à la durée d'un palier, de sorte qu'à l'instant t₁₁₂, le récepteur n'a pas détecté le premier palier. Il n'est alors pas en mesure de déterminer s'il doit :
- changer de canal fréquentiel pour veiller le deuxième palier, la détection du premier palier ayant échoué pour cause de mauvaises conditions de propagation ou brouillage par exemple, ou
- rester sur le canal fréquentiel du premier palier, celui-ci n'ayant pas encore atteint le récepteur.

Il existe donc une incertitude sur le changement des canaux fréquentiels. Le mécanisme de synchronisation par palier n'est donc pas adapté au cas pratique où le retard de propagation peut être supérieur à la durée d'un palier.

Certains réseaux de télécommunications ad-hoc, en particulier les réseaux d'équipements dans le domaine aéronautique ou naval, ont des élongations pouvant atteindre plusieurs centaines de kilomètres (la durée de propagation correspondant à la transmission d'un signal sur une distance de 500km est de 1.6ms). A l'inverse, la robustesse à l'interception et au brouillage d'une forme d'onde à saut de fréquence augmente avec le rythme de saut. Il est alors courant d'atteindre un rythme de saut de plusieurs centaines voire plusieurs milliers de sauts par seconde, un rythme de 1000 sauts par seconde correspondant à un palier de 1 ms. Il est donc nécessaire de trouver une solution permettant de réaliser l'estimation du retard de propagation dans un réseau de télécommunications ad-hoc où le retard de propagation peut être supérieur à la durée d'un palier de communications.

A cet effet, il est connu de l'état de l'art, des formes d'ondes conçues pour réaliser la synchronisation entre émetteur et récepteur au niveau du slot (synchronisation slot). Dans un mécanisme de synchronisation slot, le premier palier transmis est dédié à l'envoi d'un signal de synchronisation permettant au récepteur d'estimer un écart temporel Δt lié au retard de propagation entre émetteur et récepteur. Cette recherche est réalisée une seule fois pour l'ensemble du slot.

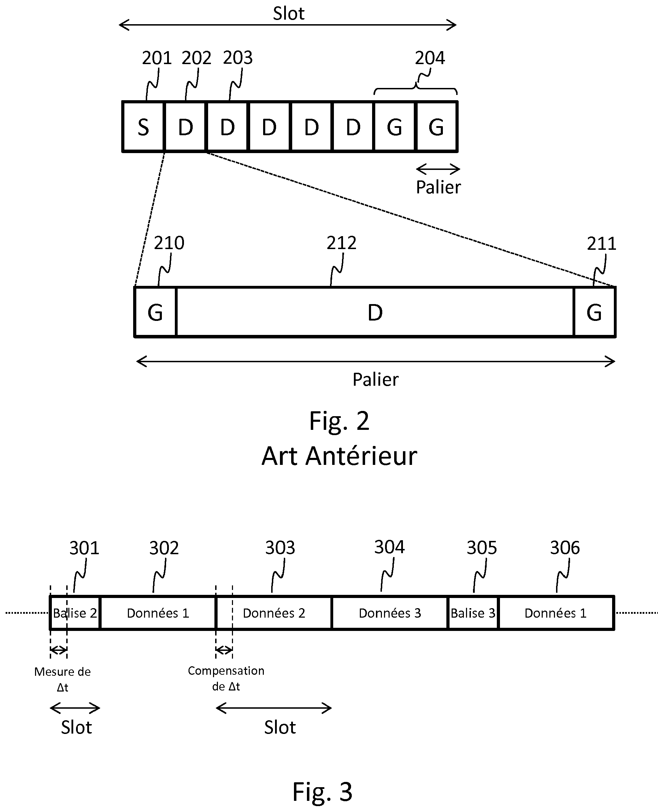

La figure 2 représente, à titre d'illustration, la structure d'un slot et d'un palier dans le cadre d'une transmission où la synchronisation se fait à l'horizon du slot.

Le slot comprend un premier palier 201 transportant une séquence connue permettant l'estimation de l'écart Δt séparant l'instant de réception effectif du premier palier 201 du début du slot. Les paliers suivants 202, 203, transportent les données utiles. Le slot se termine par un ou plusieurs paliers de garde 204 qui ne sont pas transmis et permettent d'éviter les collisions entre paquets transmis consécutivement par des équipements distincts, tout comme les paliers 110 de l'exemple présenté en figure 1b.

Les paliers de données (et de manière identique les paliers de synchronisation) comprennent un temps de garde 210 situé en début de palier, et un temps de garde 211 situé en fin de palier pour permettre à l'équipement de changer de canal fréquentiel. Les données utiles (ou les séquences connues permettant la synchronisation) sont transmises dans le bloc 212.

Le récepteur se positionne sur le canal fréquentiel auquel est transmis le palier de synchronisation 201, et ne change pas de canal fréquentiel tant que le palier de synchronisation n'a pas été reçu. Il calcule ensuite l'écart Δt correspondant à la propagation du signal transmis par l'émetteur, et adapte les commutations des canaux de réception en conséquence. Ce fonctionnement est indépendant de la longueur des paliers et du rythme du saut de fréquence, ce qui le rend compatible d'une utilisation dans un contexte où les temps de propagation peuvent être supérieurs à la durée d'un palier. Cependant, avec ce mécanisme, la bonne réception de l'ensemble du slot dépend de la bonne réception du palier de synchronisation. Cette solution est donc peu robuste aux mauvaises conditions de propagation et/ou au brouillage. En effet, la perte du premier palier entraine la perte de l'ensemble du slot.

En outre, avec cette solution, l'écart temporel Δt estimé sur le premier palier est considéré comme invariant sur l'ensemble du slot. Cette hypothèse est souvent fausse, en particulier dans le domaine aéronautique où les équipements se déplacent à vitesse très élevée. En résultent des erreurs sur les instants d'échantillonnage des paliers, et donc des réceptions incorrectes.

Si le mécanisme de synchronisation slot répond donc bien au besoin de synchronisation dans un réseau à saut de fréquence lorsque la durée de propagation peut être sensiblement égal ou supérieur à la durée d'un palier, il n'est pas optimal car elle ne permet pas de suivre les variations des temps de propagation dans le réseau, et est peu robuste au brouillage et mauvaises conditions de propagation.

Il existe donc un besoin concernant une solution permettant aux récepteurs de lever toute incertitude lors de la planification des canaux fréquentiels de réception tout en surmontant l'ensemble des problèmes de l'état de l'art mentionnés ci-dessus.

A cet effet, l'invention décrit un procédé de synchronisation dans un réseau de télécommunications ad-hoc à saut de fréquence selon la revendication 1.

Enfin, l'objet de l'invention porte sur un équipement d'émission/réception dans un réseau de télécommunications ad-hoc à saut de fréquence selon la revendication 11.

D'autres aspects sont décrits dans les revendications dépendantes.

### Description

L'invention sera mieux comprise et d'autres caractéristiques et avantages apparaîtront mieux à la lecture de la description qui suit, donnée à titre non limitatif, et grâce aux figures annexées parmi lesquelles :
- les figures 1a, 1b et 1c décrivent, à titre d'illustration, la structure d'un palier dans le cadre d'une transmission selon l'état de l'art où la synchronisation se fait palier par palier, et les problèmes qu'une telle synchronisation pose,
- la figure 2 représente, à titre d'illustration, la structure d'un slot et d'un palier dans le cadre d'une transmission selon l'état de l'art où la synchronisation se fait slot par slot,
- la figure 3 représente un exemple de trame TDMA permettant la mise en oeuvre du procédé de synchronisation selon un mode de réalisation de l'invention,
- la figure 4 représente les étapes mises en oeuvre par un procédé de synchronisation selon un mode de réalisation de l'invention,
- la figure 5 représente les étapes mises en oeuvre par un procédé de réception de données selon un mode de réalisation de l'invention.

Dans la suite du document, on désignera par « durée de propagation maximum » le temps mis par un signal radiofréquence pour parcourir une distance correspondant à l'élongation maximale théorique du réseau de télécommunications. En effet, cette élongation maximale est une information connue lors de la mise en oeuvre d'un réseau de télécommunications, généralement fournie par un cahier des charges et qui permet de dimensionner de nombreux paramètres tels que les puissances d'émission par exemple, et donc la taille des amplificateurs et des batteries utilisés.

Le but recherché par l'invention est de proposer un mécanisme permettant d'estimer et de compenser l'écart temporel Δt séparant le début d'un slot de l'instant effectif auquel le signal est reçu dans un réseau ad-hoc à saut de fréquence qui soit compatible de durées de palier inférieures au temps de propagation maximum sur le réseau. Le procédé proposé permet de lever les incertitudes des équipements de réception quant aux instants auxquels ils doivent changer de canal fréquentiel. Un autre but recherché par l'invention est que ce procédé soit robuste au brouillage et aux variations des conditions de propagation, ce qui exclut tout mécanisme de synchronisation réalisé au niveau slot tel que celui décrit en lien avec la figure 2.

Pour ceci, le procédé objet de l'invention propose de réserver des slots particuliers de la trame TDMA organisant les transmissions, pour que chaque équipement du réseau transmette à son tour un signal dit balise, pouvant être constituée de données quelconques, et dont l'équipement à l'origine de l'émission et l'instant d'émission sont connus de tous les équipements du réseau. Cette balise permet à chaque équipement du réseau en mesure de la recevoir d'estimer un écart temporel Δt le séparant de l'équipement émettant la balise. L'organisation de la trame TDMA en ce qui concerne l'émission des balises, c'est à dire les slots alloués à cet effet et les équipements auxquels ils sont attribués, sont connus de l'ensemble des équipements du réseau. La trame TDMA est organisée de manière à ce que chaque équipement transmette la balise à son tour, afin que les équipements du réseau qui entrent en contact radio puissent estimer l'écart temporel Δt, préalable nécessaire à la transmission de données utiles entre ces équipements. La balise est transmise sur un canal fréquentiel donné. Elle peut être émise dans des slots plus courts que les slots de données. Elle est donc avantageusement transmise sur un seul palier.

Les équipements du réseau sont configurés pour veiller l'ensemble des balises transmises par les équipements du réseau dans les slots qui leur sont attribués à cet effet. Lorsqu'une balise est détectée pour la première fois, comme par exemple lorsque que deux équipements qui étaient au préalable trop éloignés pour communiquer se sont rapprochés ou au démarrage d'un équipement, l'écart temporel Δt est estimé grâce à la balise. Afin de supprimer toute incertitude sur le canal fréquentiel à veiller, la balise est transmise sur un seul palier. Elle comprend en outre un temps de garde permettant d'éviter les collisions entre slots consécutifs. Le récepteur veillant la balise est configuré pour demeurer sur le canal fréquentiel associé pendant une durée maximum relative au temps de propagation maximum dans le réseau, et non à la durée du palier. Lorsque la balise est détectée, un écart temporel Δt correspondant au retard de propagation du signal entre les deux équipements est estimé, puis utilisé pour la réception des slots de données suivants transmis par le même émetteur. L'écart temporel Δt est remis à jour suffisamment souvent pour suivre les variations liées aux déplacements relatifs des équipements du réseau.

Les paliers utilisés pour les transmissions de balises ou de données utiles comprennent une séquence connue de l'émetteur et des récepteurs, comme la séquence pilote 103 de la figure 1a. Les récepteurs sont configurés pour détecter les paliers en calculant un produit de corrélation entre la séquence de donnée connue et le signal reçu. Les pics du produit de corrélation correspondent à l'instant de réception de la séquence connue dans le palier, et permettent donc de déterminer l'heure effective à laquelle est reçu chaque palier. Avantageusement, les paliers disposent en outre de temps de garde initiaux et finaux comparables aux temps de garde 101 et 102 de la figure 1a, qui permettent de compenser d'éventuels décalages entre les horloges des équipements, d'éventuelles erreurs de mesures, ainsi que des variations des temps de propagation entre les équipements.

Le procédé de synchronisation objet de la présente invention est alors implémenté pour partie au niveau de la couche protocolaire (allocation de slots particuliers pour la transmission de balises, programmation du récepteur pour une recherche de la balise, estimation d'un retard de propagation entre chacun des équipements du réseau, utilisation de ce retard pour la programmation de la partie radio du récepteur) et pour partie au niveau de la couche physique (mesure et prise en compte des retards de propagation estimés lors de la réception des paliers utilisés pour la transmission de balises et la transmission de données utiles).

La figure 3 représente un exemple de trame TDMA permettant la mise en oeuvre du procédé de synchronisation selon un mode de réalisation de l'invention. Y est représenté une portion de trame TDMA comprenant six slots 301 à 306 dans un réseau comprenant trois équipements.

La trame TDMA comprend des slots 302, 303, 304 et 306 servant à la transmission de données utiles. Le slot 302 est assigné à la transmission de données par l'équipement numéro 1, le slot 303 à la transmission de données par l'équipement numéro 2, le slot 303 à la transmission de données par l'équipement numéro 3 et le slot 306 à la transmission de données par l'équipement numéro 1. Chacun de ces slots comprend un ou plusieurs paliers transmis sur des canaux fréquentiels choisis parmi une pluralité de canaux fréquentiels selon une loi de saut prédéfinie connue de l'ensemble des équipements du réseau de télécommunications. L'allocation de ces slots aux différents équipements peut être fixe, chaque équipement parlant tour à tour, ou dynamique, les assignations étant réalisées en fonction des besoins en bande passante de chacun des équipements et de la priorité de leurs messages. Les slots 301 et 305 sont dédiés à la transmission d'une balise, respectivement par les équipements numéro 2 et numéro 3. La durée entre deux slots dédiés à la transmission de la balise depuis un équipement donné du réseau est avantageusement choisie en fonction d'une durée pendant laquelle l'écart temporel Δt est considéré comme étant valable, cette durée étant liée à la vitesse de déplacement maximale des équipements et à la longueur des intervalles de garde des paliers permettant de compenser une variation de l'écart temporel Δt. Cette durée est donc un paramètre d'implémentation lié au comportement attendu des équipements du réseau de télécommunications. Il peut en outre tenir compte de la possibilité qu'une ou plusieurs balises successives ne soient pas détectées par un équipement du réseau, en augmentant la fréquence des allocations de slots pour la transmission de balises.

Dans l'exemple de la figure 3, l'équipement numéro 2 du réseau de télécommunications transmet une balise dans le slot 301. La balise ne comprend pas nécessairement de données autres que les séquences connues permettant au récepteur de détecter le palier, mais elle peut également être complétée par des données quelconques, comme par exemple des données utilisées pour la synchronisation des horloges ou des couches protocolaires des différents équipements du réseau. Pendant le slot 301, les équipements ne disposant pas d'une estimée de l'écart temporel Δt avec le noeud 2 veillent la balise. Les autres équipements peuvent également veiller cette balise, de manière à ajuster leur estimée de l'écart temporel Δt avec l'équipement émettant la balise. Lors de la réception de la balise, chaque équipement est configuré pour enregistrer l'heure d'arrivée du signal correspondant à la séquence connue, et l'utiliser pour estimer l'heure correspondant au début du palier reçu. L'écart Δt correspond à l'écart entre l'heure de début du slot 301 et l'heure effective à laquelle le palier utilisé pour la transmission de la balise a été reçu.

Par la suite, lors de la transmission d'un slot de données, comme par exemple lors de la transmission du slot 303 de la figure 3, les équipements de réception ont connaissance de l'écart temporel Δt qui affecte la réception des transmissions réalisées par l'équipement 2, et sont configurés pour prendre en compte cet écart temporel lors de la programmation de leur chaîne radio, en programmant les sauts de fréquence sur des durées égales à la durée d'un palier à partir d'un moment correspondant à l'heure de début du slot retardé de Δt.

La transmission d'une balise dans un slot dédié pour chaque équipement du réseau permet de garantir que chaque équipement émette avec une fréquence suffisante, ce qui n'aurait pas été le cas dans le cas d'un TDMA totalement dynamique. La présence d'une balise spécifiquement dédiée au calcul de l'écart temporel Δt, émise par chacun des équipements du réseau successivement, permet de garantir que l'ensemble des équipements en contact radio sont en mesure de calculer cet écart temporel et de l'entretenir, et donc de communiquer avec tous les équipements à portée radio.

Les heures de transmission de la balise de chaque équipement, c'est-à-dire les positions dans la trame TDMA des slots dédiés, sont fixes et connues de l'ensemble des équipements du réseau de télécommunications, contrairement aux slots de données qui peuvent être alloués dynamiquement. Les slots pour la transmission de la balise sont alloués statiquement et périodiquement à chaque équipement afin de satisfaire aux exigences portant sur la validité des écarts temporels Δt estimés, ce qui permet à chaque équipement de connaitre les instants et les équipements à qui sont alloués ces slots.

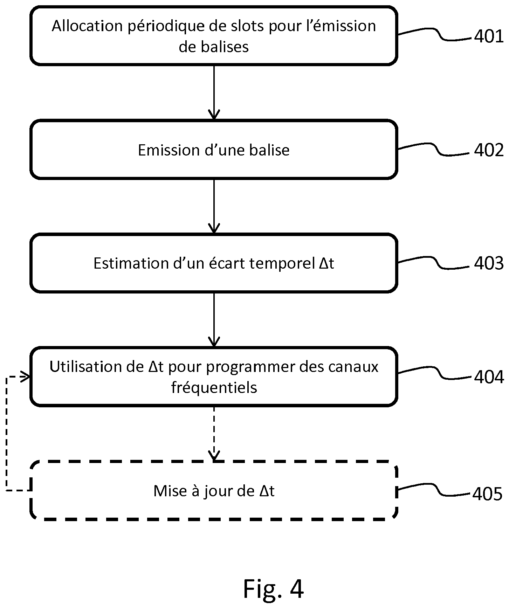

La figure 4 représente les différentes étapes mises en oeuvre par un procédé de synchronisation selon un mode de réalisation de l'invention. Le procédé est destiné à être mis en oeuvre dans un réseau ad-hoc à saut de fréquence comprenant une pluralité d'équipements d'émission/réception dans lequel les données sont transmises en TDMA, c'est-à-dire qu'elles sont organisées selon une trame temporelle telle que celle représentée à la figure 3, dans laquelle des slots sont attribués aux différents équipements du réseau. La durée d'un slot peut varier, mais elle est nécessairement supérieure au temps de propagation maximum d'un signal sur le réseau de télécommunications.

Le procédé décrit comprend une première étape 401 d'allocation dans la trame TDMA de slots dédiés à la transmission de balises. Cette allocation est faite pour chacun des équipements du réseau destiné à émettre des données. Ces allocations sont faites à des instants connus de l'ensemble des noeuds du réseau. Ceux-ci connaissent également l'équipement à l'origine de l'émission du signal balise dans chacun des intervalles. Une telle allocations statique des slots pour la transmission des signaux balise n'est pas incompatible de l'allocation dynamique des slots pour la transmission des données dans le reste de la trame TDMA, où les allocations sont faites en fonction des entrées/sorties d'équipements dans le réseau, et/ou en fonction des besoins de chacun des équipements du réseau et de la priorité des messages. Les slots pour la transmission des balises ont une durée égale à un palier plus un temps de garde au moins égal au temps de propagation maximum au sein du réseau de télécommunications.

Le procédé décrit comprend ensuite une deuxième étape 402 d'émission de la balise par les équipements dans les slots qui leur sont alloués à cet effet. Le palier sur lequel est émis la balise comprend au moins un temps de garde positionné en début de palier et un temps de garde positionné en fin de palier, de manière comparable aux temps de garde 101 et 102 décrits à la figure 1a. Ces temps de garde servent à compenser d'éventuels décalages d'horloge entre les différents équipements, mais également à compenser d'éventuelles variations de l'écart temporel Δt entre deux mesures, ces variations étant liées aux déplacements relatifs des équipements. La balise comprend en outre une séquence connue de l'ensemble des équipements du réseau qui permet à ces derniers de détecter le début du palier. Cette séquence connue est constituée d'une suite de symboles connus, tout comme la séquence pilote 103 décrite à la figure 1a. Elle est avantageusement positionnée en début de palier, juste après le temps de garde, mais pourrait être positionnée à n'importe quel endroit dans le palier. Il peut s'agir d'une séquence de référence fixe, d'une séquence de référence choisie parmi un grand nombre de séquences de référence selon une loi connue des équipements du réseau, ou d'une séquence aléatoire générée avec une graine connue des équipements du réseau. Avantageusement, le palier contenant la séquence connue peut être complété par des données quelconques dont la perte n'impacterait pas le fonctionnement du réseau de télécommunications, comme par exemple des données de signalisation permettant la synchronisation des couches protocolaires, et en particulier des horloges des équipements du réseau.

Le procédé comprend ensuite une étape 403 d'estimation d'un écart temporel Δt. Cette étape est réalisée par tous les équipements ne disposant pas d'une estimée d'écart temporel Δt avec l'équipement émettant la balise, c'est-à-dire l'ensemble des équipements entrant en contact radio avec l'équipement émettant la balise. C'est le cas par exemple lorsque deux équipements qui étaient jusqu'ici trop éloignés pour communiquer se rapprochent, lorsque la puissance d'émission d'un équipement augmente, lorsque les conditions de propagation ou de brouillage évoluent, ou lorsqu'un équipement entre dans le réseau. Cette étape peut être réalisée par tous les équipements du réseau, afin de mettre à jour chaque estimée de l'écart temporel Δt.

A cet effet, les équipements réalisant l'étape 403 positionnent leur radio sur le canal fréquentiel utilisé pour la transmission de la balise et veillent la balise à partir du début du slot, et ce jusqu'à ce que sa détection ou à défaut jusqu'à ce qu'une durée au moins égale au temps de propagation maximum sur le réseau soit écoulée. Les équipements de réception détectent la présence de la balise grâce à la séquence de symboles connus qu'elle contient. Ils déterminent un instant d'arrivée de ladite séquence, et par conséquent une heure d'arrivée du palier utilisé pour transmettre la balise. La différence entre cette heure effective d'arrivée du palier et l'heure de début de slot permet à chaque récepteur d'estimer l'écart temporel Δt le séparant de l'émetteur de la balise. La balise ne comprenant qu'un seul palier, elle peut être recherchée par les récepteurs sur l'ensemble du slot sans que de décision ne doive être prise à propos d'un changement de canal fréquentiel de réception, ce qui rend le procédé objet de l'invention compatible d'une mise en oeuvre dans un réseau où la durée de propagation maximum est supérieure à la durée d'un palier. L'étape 403 de détermination de l'écart temporel Δt est une étape préliminaire indispensable à la bonne réception des données utiles transmises entre deux équipements du réseau.

Le procédé comprend enfin une étape 404 d'utilisation de l'écart temporel Δt estimé pour programmer la réception des émissions suivantes faites par les équipements du réseau. A cet effet, les équipements recevant des données utiles sont configurés pour programmer leur chaîne radio afin de veiller le premier palier de données sur le canal fréquentiel associé à partir d'une heure correspondant à l'heure de début du slot plus Δt. Ils sont également programmés pour changer de canal fréquentiel à des intervalles fixes correspondant à la durée d'un palier de manière à recevoir les paliers successifs, et cela sans tenir compte de l'état de réception du palier. Sur chaque palier, le récepteur est configuré pour veiller la séquence de données connues, par corrélations, afin de détecter le début effectif du palier. Lorsque l'écart Δt est demeuré constant depuis son estimation réalisée lors de la troisième étape, la réception effective de chaque palier correspondra exactement à l'instant programmé du récepteur. Chaque palier sera alors reçu dans son intégralité avant le prochain changement de canal fréquentiel. Lorsque l'écart Δt a varié depuis son estimation, l'instant effectif de réception de chaque palier sera avancé ou retardé par rapport à l'instant programmé dans le récepteur, mais grâce à la recherche de la séquence de données connues, le récepteur suit les variations de Δt. En outre, les intervalles de garde positionnés en début et fin de chaque palier garantissent que l'ensemble des données utiles du palier sont reçues dans l'intervalle de temps auquel le canal fréquentiel est considéré. Ainsi, le récepteur se synchronise finement sur chaque palier reçu en recherchant la séquence connue transportée, de manière comparable à ce qui est fait dans le cadre d'une synchronisation palier, à la différence notable que cette synchronisation fine ne conditionne plus les instants auxquels interviennent les changements de canaux fréquentiels. Ces derniers sont déterminés à partir de la valeur Δt, valeur qui est estimée sur les balises puis avantageusement mise à jour au fil de l'eau.

A cet effet, le procédé selon l'invention comprend une étape supplémentaire 405 de mise à jour de l'écart temporel Δt à partir des signaux reçus. Cette étape est réalisée ponctuellement et périodiquement.

Dans un mode de réalisation de l'invention, cette mise à jour est opérée à chaque réception d'une balise. Le récepteur réalise alors l'estimation de l'écart temporel Δt sur la balise de manière totalement identique à ce qui est fait durant l'étape 403 du procédé. Ce mode de réalisation permet de mettre à jour l'écart Δt de tous les noeuds du réseau, même lorsque ceux-ci n'envoient pas de données utiles. Lorsque la balise n'a pas pu être correctement reçue, par exemple en cas de mauvaises conditions de propagation, de masquage temporaire ou de brouillage, l'écart Δt n'est pas remis à jour, et le dernier écart valablement estimé est utilisé.

Dans un autre mode de réalisation, la mise à jour de l'estimation de l'écart Δt est réalisée à chaque réception de slots transmettant les données utiles (par opposition avec les slots transmettant les balises). En effet, lors de l'étape 404, une synchronisation fine destinée à détecter une variation de l'écart Δt est réalisée pour chaque palier des slots utilisés pour la transmission de données utiles. Une mesure d'écart temporel Δti peut être réalisée sur chacun des paliers, Δti étant l'écart entre l'heure de début du palier i (c'est à dire l'heure de début de slot pour le premier palier, l'heure de début de slot plus la durée d'un palier pour le deuxième palier, etc...) et l'heure effective de réception du palier i. Ces écarts Δti peuvent être utilisés pour remplacer l'écart temporel Δt, par exemple en considérant la moyenne des Δti, améliorant ainsi la robustesse face au bruit de mesure, ou en considérant le plus petit Δti mesuré, améliorant ainsi la robustesse face aux réflexions multiples du signal, la position optimale de synchronisation en présence de trajets multiples correspondant à la position du premier trajet reçu lorsque le récepteur dispose d'un égaliseur. Lorsqu'un palier n'est pas correctement reçu, par exemple pour cause de trajets multiples, masquage temporaire ou brouillage, la valeur de Δti associée n'est pas considérée pour la mise à jour de Δt. Ce mode de réalisation permet de remettre à jour très régulièrement l'écart Δt estimé.

Les deux modes de réalisation précédents peuvent être implémentés séparément ou simultanément.

Une fois la valeur de l'écart temporel Δt mise à jour, cette valeur est utilisée pour la programmation des canaux fréquentiels du récepteur lors de la réception des slots de données (étape 404).

Par rapport à l'art antérieur, le procédé de synchronisation proposé permet de lever toute ambiguïté relative au changement de canal fréquentiel dans les cas où la durée de propagation peut être proche ou supérieure à la durée d'un palier, contrairement à la solution de l'état de l'art présenté aux figures 1a à 1c. La solution proposée est compatible d'une implémentation dans les réseaux ad-hoc et fonctionne en particulier pour la diffusion en point à multipoints. Elle n'introduit pas de faiblesse particulière à la détection et au brouillage car le signal de synchronisation n'a pas de marquant particulier qui pourrait permettre à un observateur extérieur au réseau de le détecter. Enfin, contrairement à l'état de l'art décrit à la figure 2, la solution proposée a l'avantage de compenser et suivre les variations des temps de propagation entre les équipements pouvant avoir lieu entre deux estimations du retard de propagation.

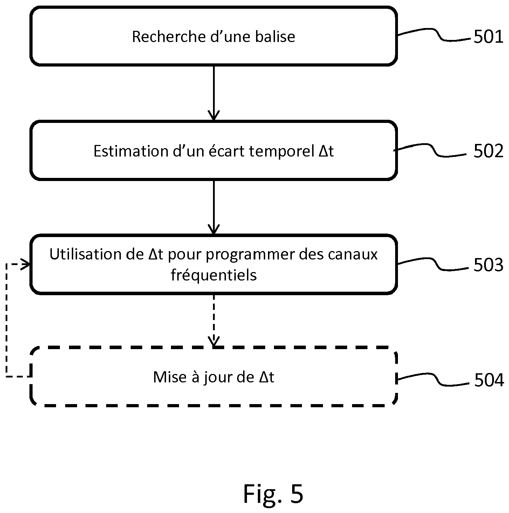

L'invention porte également sur un procédé de réception de données mis en oeuvre par un premier équipement dans un réseau de télécommunications ad-hoc à saut de fréquence. La figure 5 décrit les étapes d'un mode de réalisation du procédé. Les données sont organisées en TDMA dans le réseau, c'est-à-dire que des slots sont successivement réservés pour les émissions d'un équipement particulier parmi l'ensemble des équipements du réseau. Chaque slot a une durée égale à la durée d'un palier (l'inverse du rythme de saut) multipliée par le nombre de paliers du slots plus un temps de garde dont la durée est au moins égale au temps de propagation maximum sur le réseau.

Le procédé mis en oeuvre sur l'équipement de réception comprend une première étape 501 de recherche d'une balise émise par un deuxième équipement dans le slot spécialement réservé à cet effet. Cette étape est réalisée au moins lorsque le premier équipement ne dispose pas d'une estimé d'un écart temporel Δt avec le deuxième équipement. Le récepteur est configuré pour rechercher la balise sur canal fréquentiel donné, jusqu'à sa détection ou à défaut pendant une durée au moins égale au temps de propagation maximum sur le réseau de télécommunications.

Lorsque la balise n'a pas été détectée, le récepteur doit attendre la transmission, par le même deuxième équipement, d'une prochaine balise pour redémarrer l'étape 501.

Lorsque la balise a été détectée, le procédé comprend une étape 502 d'estimation d'un écart temporel Δt entre le premier et le deuxième équipement. Cet écart temporel est estimé à partir de l'heure de début du slot dédié à la transmission de la balise, et de l'heure à laquelle la balise a été effectivement reçue.

Enfin, le procédé comprend une troisième étape 503 de programmation des canaux fréquentiels de la chaîne radio du premier équipement pour la réception des slots de données transmis par le deuxième équipement. La chaîne radio est programmée pour se positionner sur les canaux fréquentiels correspondant au slot de données transmis pendant des durées égales à la durée d'un palier à partir d'une heure correspondant au début du slot de données retardé d'une durée égale à l'écart temporel Δt estimé.

Avantageusement, le procédé comprend une étape 504 de mise à jour de l'écart temporel Δt avec le deuxième équipement. Cette mise à jour peut être réalisée à partir des balises transmises par le deuxième équipement, à partir des données utiles transmises par le deuxième équipement, ou à partir des deux.

Enfin, l'invention porte sur un équipement de réception dans un réseau de télécommunications ad-hoc à saut de fréquence, configuré pour implémenter un procédé de réception tel que celui décrit précédemment. Cette configuration se fait à plusieurs niveaux du récepteur :
- au niveau de la couche protocolaire, pour la prise en compte de slots dédiés à la transmission de données utilisés afin de synchroniser le récepteur avec un émetteur donné et la mesure du retard de propagation avec cet émetteur,
- au niveau de la couche physique, pour la prise en compte des mesures de retards de propagation lors de la programmation des sauts de fréquence.

A cet effet, l'équipement considéré dispose d'une chaine radio pilotable, permettant de sélectionner un canal fréquentiel pour la réception de données, et d'une chaine de traitement numérique sur laquelle le procédé décrit est implémenté, comme par exemple un DSP (sigle anglais pour *Digital Signal Processor,* ou processeur de signal numérique), un FPGA (sigle anglais pour *Field Programmable Gate Array,* ou réseau de portes programmable), un ASIC (acronyme anglais pour *Application-Specific Integrated Circuit,* ou circuit intégré propre à une application), ou n'importe quelle cible matérielle permettant d'exécuter les traitements nécessaires, tel qu'un processeur.

## Revendications

1. Procédé de synchronisation dans un réseau de télécommunications ad-hoc à saut de fréquence comprenant une pluralité d'équipements configurés pour échanger des données organisées selon une trame temporelle comprenant des intervalles temporels dits slots, chaque slot comprenant au moins un palier (111) de durée fixe transmis dans un canal fréquentiel sélectionné parmi une pluralité de canaux fréquentiels et un temps de garde (110) d'une durée au moins égale au temps de propagation d'un signal sur une distance correspondant à une élongation maximale du réseau de télécommunications, chaque slot étant réservé pour les émissions d'un équipement particulier parmi les équipements du réseau, le procédé comprenant :
- une étape (501), réalisée par un premier équipement, de recherche d'une balise émise dans un slot dédié de la trame temporelle pour chaque deuxième équipement avec lequel il n'était auparavant pas en contact radio, ledit slot dédié étant connu de l'ensemble des équipements du réseau, et lorsque la balise est reçue :
• une étape (403, 502), réalisée par le premier équipement, d'estimation d'un écart temporel Δ*t* avec ledit deuxième équipement à partir d'une heure de début du slot et d'une heure de réception effective de la balise, et
• une étape (404, 503), réalisée par le premier équipement, d'utilisation de l'écart temporel Δ*t* pour programmer les instants de réception des slots de données envoyées par ledit deuxième équipement du réseau.

2. Procédé de synchronisation selon la revendication précédente, comprenant en outre une étape (405, 504), réalisée par le premier équipement, de mise à jour de l'écart temporel Δ*t* à partir des émissions (303) faites par ledit deuxième équipement du réseau.

3. Procédé de synchronisation selon l'une des revendications 1 et 2, comprenant en outre les étapes préalables de :
- allocation périodique (401) d'au moins un slot (301) de la trame temporelle par équipement du réseau pour la transmission d'une balise, ladite allocation étant connue de l'ensemble des équipements du réseau de télécommunications,
- émission (402) de ladite balise par les équipements du réseau dans les slots qui leur sont alloués lors de l'étape d'allocation périodique d'au moins un slot de la trame temporelle par équipement du réseau pour la transmission d'une balise.

4. Procédé de synchronisation selon l'une des revendications précédentes, dans lequel les slots (301) alloués pour la transmission de la balise comprennent un seul palier.

5. Procédé de synchronisation selon l'une des revendications précédentes, dans lequel les paliers transmis comprennent un temps de garde initial (101), un temps de garde final (102), et au moins une séquence de données connue de l'ensemble des équipements du réseau (103) et utilisée pour la détection des paliers.

6. Procédé de synchronisation selon l'une des revendications précédentes, dans lequel l'étape (404, 503) d'utilisation de l'écart temporel Δ*t* pour programmer des canaux fréquentiels de réception de slots de données envoyées par le deuxième équipement comprend la réception des paliers du slot de données sur chacun des canaux fréquentiels associés auxdits paliers successivement pendant des durées égales à la durée d'un palier à partir d'un instant déterminé par une heure de début du slot et l'écart temporel Δ*t*.

7. Procédé de synchronisation selon l'une des revendications 2 à 6, dans lequel la cinquième étape (405, 504) de mise à jour de l'écart temporel Δ*t* est faite à chaque réception d'une balise émise par le deuxième équipement.

8. Procédé de synchronisation selon l'une des revendications 2 à 7, dans lequel la cinquième étape (405, 504) de mise à jour de l'écart temporel Δ*t* est faite à chaque réception d'un signal émis par le deuxième équipement dans un slot de données, la mise à jour de l'écart temporel Δ*t* comprenant l'estimation d'un écart temporel entre une heure de début de palier et une heure effective de réception du palier pour des paliers dudit slot de données, l'écart temporel Δ*t* étant mis à jour à partir du plus petit écart temporel estimé sur les paliers du slot de données.

9. Procédé de synchronisation selon l'une des revendications 2 à 7, dans lequel la cinquième étape (405, 504) de mise à jour de l'écart temporel Δ*t* est faite à chaque réception d'un signal émis par le deuxième équipement dans un slot de données, la mise à jour de l'écart temporel Δ*t* comprenant l'estimation d'un écart temporel entre une heure de début de palier et une heure effective de réception du palier pour des palier dudit slot de données, l'écart temporel Δ*t* étant mis à jour à partir de la moyenne des écarts temporels estimés sur les paliers du slot de données.

10. Procédé de synchronisation selon l'une des revendications précédentes, dans lequel les allocations de slot pour la transmission de balises sont faites de manière statique, et les allocations de slot pour la transmission de signaux autres que balises sont faites de manière dynamique.

11. Equipement dans un réseau de télécommunications ad-hoc à saut de fréquence, configuré pour mettre en oeuvre un procédé de synchronisation selon la revendication 1.

## Patentansprüche

1. Synchronisationsverfahren in einem Ad-hoc-Telekommunikationsnetz mit Frequenzsprung, das eine Vielzahl von Geräten umfasst, die zum Austauschen von Daten konfiguriert sind, die gemäß einem Zeitrahmen organisiert sind, der Zeitintervalle, sogenannte Slots, umfasst, wobei jeder Slot mindestens eine Stufe (111) von fester Dauer, die in einem aus einer Vielzahl von Frequenzkanälen ausgewählten Frequenzkanal übertragen wird, und eine Schutzzeit (110) mit einer Dauer von mindestens gleich der Ausbreitungszeit eines Signals über eine Entfernung entsprechend einer maximalen Ausdehnung des Telekommunikationsnetzes umfasst, wobei jeder Slot für die Sendungen eines bestimmten Geräts unter den Geräten des Netzes reserviert ist, wobei das Verfahren Folgendes umfasst:
- einen Schritt (501), durchgeführt von einem ersten Gerät, des Suchens nach einem Beacon, das in einem dedizierten Slot des Zeitrahmens für jedes zweite Gerät, mit dem es zuvor nicht in Funkkontakt stand, gesendet wurde, wobei der dedizierte Slot allen Geräten des Netzwerks bekannt ist, und wenn das Beacon empfangen wird:
• einen Schritt (403, 502), durchgeführt von dem ersten Gerät, des Schätzens eines Zeitabstands Δ*t* mit dem zweiten Gerät auf der Basis einer Startzeit des Slots und einer tatsächlichen Empfangszeit des Beacons, und
• einen Schritt (404, 503), durchgeführt von dem ersten Gerät, des Nutzens des Zeitabstands Δ*t* zum Programmieren der Empfangszeiten der vom zweiten Gerät des Netzwerks gesendeten Datenslots.

2. Synchronisationsverfahren nach dem vorhergehenden Anspruch, das ferner einen Schritt (405, 504), durchgeführt vom ersten Gerät, des Aktualisierens des Zeitabstands Δ*t* auf der Basis von vom zweiten Gerät des Netzwerks vorgenommenen Sendungen (303) umfasst.

3. Synchronisationsverfahren nach einem der Ansprüche 1 und 2, das ferner die folgenden Vorabschritte umfasst:
- periodisches Zuweisen (401) von mindestens einem Slot (301) des Zeitrahmens pro Gerät des Netzwerks für die Übertragung eines Beacons, wobei die Zuweisung allen Geräten des Telekommunikationsnetzes bekannt ist,
- Senden (402) des Beacons durch die Geräte des Netzwerks in den Slots, die ihnen in dem Schritt des periodischen Zuweisens von mindestens einem Slot des Zeitrahmens pro Gerät des Netzwerks für die Übertragung eines Beacons zugewiesen wurden.

4. Synchronisationsverfahren nach einem der vorhergehenden Ansprüche, wobei die für die Übertragung des Beacons zugewiesenen Slots (301) eine einzige Stufe umfassen.

5. Synchronisationsverfahren nach einem der vorhergehenden Ansprüche, wobei die übertragenen Stufen eine Anfangsschutzzeit (101), eine Endschutzzeit (102) und mindestens eine Datensequenz umfassen, die allen Geräten des Netzwerks (103) bekannt ist und zur Erkennung der Stufen benutzt wird.

6. Synchronisationsverfahren nach einem der vorhergehenden Ansprüche, wobei der Schritt (404, 503) des Nutzens des Zeitabstands Δ*t* zum Programmieren von Frequenzkanälen für den Empfang von vom zweiten Gerät gesendeten Datenslots das Empfangen von Stufen des Datenslots auf jedem der mit den Stufen assoziierten Frequenzkanäle nacheinander für Dauern entsprechend der Dauer einer Stufe ab einem Zeitpunkt umfasst, der durch eine Anfangszeit des Slots und den Zeitabstand Δ*t* bestimmt wird.

7. Synchronisationsverfahren nach einem der Ansprüche 2 bis 6, wobei der fünfte Schritt (405, 504) des Aktualisierens des Zeitabstands Δ*t* bei jedem Empfang eines vom zweiten Gerät gesendeten Beacons erfolgt.

8. Synchronisationsverfahren nach einem der Ansprüche 2 bis 7, wobei der fünfte Schritt (405, 504) des Aktualisierens des Zeitabstands Δ*t* bei jedem Empfang eines vom zweiten Gerät in einem Datenslot gesendeten Signals ausgeführt wird, wobei das Aktualisieren des Zeitabstands Δ*t* das Schätzen eines Zeitabstands zwischen einer Stufenanfangszeit und einer tatsächlichen Empfangszeit der Stufe für Stufen des Datenslots umfasst, wobei der Zeitabstand Δ*t* auf der Basis des kleinsten über die Stufen des Datenslots geschätzten Zeitabstands aktualisiert wird.

9. Synchronisationsverfahren nach einem der Ansprüche 2 bis 7, wobei der fünfte Schritt (405, 504) des Aktualisierens des Zeitabstands Δ*t* bei jedem Empfang eines vom zweiten Gerät in einem Datenslot gesendeten Signals ausgeführt wird, wobei das Aktualisieren des Zeitabstands Δ*t* das Schätzen eines Zeitabstands zwischen einer Stufenanfangszeit und einer tatsächlichen Empfangszeit der Stufe für Stufen des Datenslots umfasst, wobei der Zeitabstand Δ*t* auf der Basis des Durchschnitts der geschätzten Zeitabstände über die Stufen des Datenslots aktualisiert wird.

10. Synchronisationsverfahren nach einem der vorhergehenden Ansprüche, wobei die Slotzuweisungen für die Übertragung von Beacons statisch und die Slotzuweisungen für die Übertragung von Nicht-Beacon-Signalen dynamisch erfolgen.

11. Gerät in einem Ad-hoc-Telekommunikationsnetz mit Frequenzsprung, die zum Implementieren eines Synchronisationsverfahrens nach Anspruch 1 konfiguriert ist.

## Claims

1. A method for synchronising in a frequency-hopping ad-hoc telecommunications network comprising a plurality of pieces of equipment configured to exchange data organised according to a time frame comprising time intervals called slots, each slot comprising at least one dwell (111) of set duration transmitted in a frequency channel selected from among a plurality of frequency channels and a guard time (110) of a duration at least equal to the propagation time of a signal over a distance corresponding to a maximum range of the telecommunications network, each slot being reserved for the transmissions of one particular piece of equipment among the pieces of equipment of the network, the method comprising:
- a step (501), carried out by a first piece of equipment, of searching for a beacon transmitted in a dedicated slot of the time frame for each second piece of equipment with which it was not previously in radio contact, said dedicated slot being known to all the pieces of equipment of the network, and when the beacon is received:
• a step (403, 502), carried out by the first piece of equipment, of estimating a time difference Δ*t* with said second piece of equipment from a start time of the slot and from an actual reception time of the beacon, and
• a step (404, 503), carried out by the first piece of equipment, of using the time difference Δ*t* to program reception times for the data slots sent by said second piece of equipment of the network.

2. The synchronisation method according to the preceding claim, further comprising a step (405, 504), carried out by the first piece of equipment, of updating the time difference Δ*t* on the basis of the emissions (303) carried out by said second piece of equipment of the network.

3. The synchronisation method according to one of claims 1 and 2, further comprising the preliminary steps of:
- periodically allocating (401) at least one slot (301) of the time frame per piece of equipment of the network for the transmission of a beacon, said allocation being known to all pieces of equipment of the telecommunications network,
- transmitting (402) said beacon by the pieces of equipment of the network in the slots which are allocated to them during the step of periodically allocating at least one slot of the time frame per piece of equipment of the network for the transmission of a beacon.

4. The synchronisation method according to one of the preceding claims, wherein the slots (301) allocated for the transmission of the beacon comprise a single dwell.

5. The synchronisation method according to one of the preceding claims, wherein the transmitted dwells comprise an initial guard time (101), a final guard time (102), and at least one data sequence known to all of the pieces of equipment of the network (103) and used for the detection of the dwells.

6. The synchronisation method according to one of the preceding claims, wherein the step (404, 503) of using the time difference Δ*t* to program frequency channels for receiving data slots sent by the second piece of equipment comprises receiving the dwells of the data slot in each of the frequency channels associated with said dwells successively during durations which are equal to the duration of one dwell starting from a time determined by a start time of the slot and the time difference Δt.

7. The synchronisation method according to one of claims 2 to 6, wherein the fifth step (405, 504) of updating the time difference Δ*t* is carried out on each reception of a beacon transmitted by the second piece of equipment.

8. The synchronisation method according to one of claims 2 to 7, wherein the fifth step (405, 504) of updating the time difference Δ*t* is carried out on each reception of a signal transmitted by the second piece of equipment in a data slot, the update of the time difference Δ*t* comprising estimating a time difference between a dwell start time and an actual reception time of the dwell for dwells of said data slot, the time difference Δ*t* being updated on the basis of the smallest time difference estimated in the dwells of the data slot.

9. The synchronisation method according to one of claims 2 to 7, wherein the fifth step (405, 504) of updating the time difference Δ*t* is carried out on each reception of a signal transmitted by the second piece of equipment in a data slot, the update of the time difference Δ*t* comprising estimating a time difference between a dwell start time and an actual reception time of the dwell for dwells of said data slot, the time difference Δ*t* being updated on the basis of the average of the time differences estimated in the dwells of the data slot.

10. The synchronisation method according to one of the preceding claims, wherein the slot allocations for the transmission of beacons are performed statically, and the slot allocations for the transmission of signals other than beacons are performed dynamically.

11. A piece of equipment in a frequency-hopping ad-hoc telecommunications network, configured to implement a synchronisation method according to claim 1.
